# NEW EUROPEAN PATENT SPECIFICATION

(11) **EP 1 272 029 B2**
(45) Date of publication and mention of the opposition decision: **25.04.2012**
(45) Mention of the grant of the patent: 03.08.2005
(21) Application number: 01918036.3
(22) Date of filing: 20.03.2001
(51) Int. Cl.: A01K 9/00, A01K 5/02, A01J 5/007

(54) **MILK FEEDING OF YOUNG ANIMALS**
MILCHFÜTTERUNG VON JUNGTIEREN
TETEE DE JEUNES ANIMAUX

(30) Priority: 11.04.2000 SE 0001334
(43) Date of publication of application: 08.01.2003
(73) Proprietor: DeLaval Holding AB, 147 21 Tumba (SE)
(72) Inventor: SUNDBORGER, Helene, S-147 71 Grovinge (SE)
(74) Representative: Lerwill, John
(86) International application number: PCT/SE2001/000573
(87) International publication number: WO 2001/076357

(56) References cited:
- EP-A- 0 399 604
- EP-A1- 0 628 244
- WO-A1-00/21359
- DE-T2- 69 600 305
- GB-A- 2 162 735
- SU-A1- 539 571
- DATABASE WPI Week 200028, Derwent Publications Ltd., London, GB; AN 2000-327228, XP002956072 & RU 2 132 126 C1 (BELGORROD AGRIC ACAD) 27 June 1999
- "Handboek melkveehouderij 1997", handbook, pages 178 to 180
- Bundesgesetzblatt Jahrgang, 1997, Teil I, Nr.88

## Description

The present invention generally relates to dairy farming and to milk handling therein.

Particularly, the invention relates to a feed device, an arrangement and a method for automatic milk feeding of young animals.

### DESCRIPTION OF RELATED ART AND BACKGROUND OF THE INVENTION

It is common practice in connection with modern calf breeding to separate the calves from the cow and to keep the calves in a separate calf stall where they are bred by means of fresh milk, stored milk and/or milk substitute from a liquid feed supply device. Such a liquid feed supply device may comprise a nipple enabling the calves to receive liquid feed by suckling. Although the calves may not meet the cow of theirs during their breeding period, such breeding management has proved to be successful over the years. It is important to keep the calves in such a stall separated from a herd of a great number of cows in order to avoid injuries on the calves.

Many milk producers of today have a problem to adapt the production to an optimal quantity from a market point of view. Due to common production allocation rules, the milk producers may be given a relatively high price for the milk up to a certain milk quantity, or milk quota. When more milk is produced and delivered, the milk price decreases. In view of such decreasing milk price, milk producers frequently have surplus of milk. Hence, this milk surplus may be used for calf feeding.

Further, investigations show that calves fed with fresh milk are growing faster than those being fed with milk substitute or similar. Milk fed calves are believed to be healthier and such female calves may thus develop to better milk producers. Also, there are today ethical reasons for feeding calves with fresh milk.

Automatic milking of cows is disclosed in WO 96/19916 and WO 96/19917. It is known to perform such an automatic milking in a milking stall provided in a barn in which the animals are allowed to walk about freely and find their way individually to said milking stall, to feeding stalls and to drinking apparatus. The cows are automatically identified in each stall and fed with the aid of a computer connected to the identification and feeding means used. By means of the computer, in which facts concerning each cow, when she was last milked, etc. are stored, automatic milking is initiated. The milking stall also comprises gates, which are automatically closed to retain the cow during milking and opened to let the cow leave the milking stall.

Liquid feeding devices for calves comprise typically a milk supply device connected to one or several nipple means, which are arranged so as to enable calves to suck milk from the supply device. The supply of milk may be manually or automatically through some tubing and valve arrangement. Various liquid feeding devices are known in the art, see e.g. GB 2 162 735 A, DE 198 18 528 Al, US 4,788,940, and US 4,550,685.

It is known through to GB 2 162 735 A to take waste milk from a reservoir and process it in such a way, as to make it available for young animals to drink from a nipple, at the correct temperature.

US 4,788,940 discloses a mechanism for feeding animals with liquid feed that can be withdrawn from a supply unit, such as an automatic soaking unit, and can be supplied to a suction unit via a conduit.

US 4,550,685 discloses a device for supplying liquid feed from an automatic feeding device. The device comprises an animal operated discharge member or sucker that can be displaced into a plurality of different feeding stations in a controlled manner such that feed can be supplied accurately metered.

RU2132126 discloses a feeding apparatus and method for feeding with a feed device 14, a milk line 24 connected to the feed device and to a milking machine 5,6 and means for transporting milk from a milk producing animal to the feed device 14.

### SUMMARY OF THE INVENTION

However, none of these prior art feeding devices include any possibilities for automatic selection of the milk to be supplied.

Further, these feeding devices do not disclose any means for continous automatic supply of fresh milk in immediate connection with milking of milk producing animals, and in particular they do not disclose any means for animal selective supply of fresh milk.

Further, if supply of milk is to be performed manually, this is hard and uncomfortable work, which furthermore is time-consuming and thus costly in a long perspective.

Accordingly, it is an object of the present invention to provide a feed device, an arrangement and a method for automatic milk feeding of young animals, which are adapted to remedy the problems discussed above.

It is in this respect a particular object of the invention to provide such feed device, arrangement and method for milk feeding of young animals, which are highly automated.

It is a further object of the invention to provide a feed device, an arrangement and a method for milk feeding of young animals that facilitate monitoring and control by the dairy farmer.

It is yet a further object of the invention to provide a feed device, an arrangement and a method for automatic milk feeding of young animals, which are effective, flexible and of low cost.

It is still a further object of the invention to provide a feed device, an arrangement and a method for automatic milk feeding of young animals, which are accurate, precise, reliable, and safe.

It is yet further objects of the invention to provide a feed device and an arrangement for automatic milk feeding of young animals, which are easy and straightforward to install, and to provide a milk feeding method, which is effortless and simple to perform.

The objects are attained by an apparatus as claimed in claim 1 and by a method as claimed in claim 16.

The present invention comprises the provision of a first milk line connectable to at least a first feed supply device and further connectable to a milking machine arranged for milking of a plurality of animals, particularly cows. Adaptation is provided such that the first milk line can automatically transport milk from at least a first one of the plurality of milk producing animals, particularly cows, to the first feed supply device. The first animal may be an animal, which is identified to produce milk of a predetermined quality, e.g. milk having high cell count values and/or which is unsuitable for refined dairy products or for human consumption. Also, a sick or injured animal or an animal producing beestings may be selected. Any selection may be performed on teat-individual basis. Furthermore a second feed supply device, and a second milk line connectable to the second feed supply device and further connectable to the milking machine are provided. The second milk line is adapted to automatically transport milk from at least a second one of the plurality of milk producing animals to the second feed supply device. The first feed supply device is accessible to young animals that are different from those to which said second feed supply device is accessible.

An advantage of the present invention is that it provides for an effective overall operation of a milking farm, and a flexible and dynamic use of the milk produced.

The present invention provides for a more freely chosen working plan for the dairy farmer since the feeding (and some monitoring) may be performed automatically.

A further advantage of the present invention from a milk producing point of view is that if milk of high quality for human consumption, e.g. milk having very low cell count values, is separately collected, a better price can be obtained for this milk, and hence only lower quality milk is used for calf feeding.

Further characteristics of the invention and advantages thereof will be evident from the following detailed description of embodiments of the invention.

In the following detailed description the milk producing animals are cows and the young animals are calves. However, the invention is not limited to cows and their calves, but is applicable to any animals having the capability to produce large quantities of milk, such as sheep, goats, buffaloes, horses, etc.

### BRIEF DESCRIPTION OF THE DRAWINGS

The present invention will become more fully understood from the detailed description of embodiments of the present invention given hereinbelow and the accompanying Figs. 1-3, which are given by way of illustration only, and thus are not limitative of the present invention.

Fig. 1 displays schematically an embodiment which does not belong to the claimed invention, this embodiment concerning an animal arrangement for housing a herd of animals including an automated system for milk feeding young animals.

Fig. 2 displays schematically a further embodiment of an animal arrangement for housing a herd of animals including an automated system for milk feeding young animals.

Fig. 3 displays schematically yet a further embodiment which does not belong to the claimed invention, this embodiment concerning an animal arrangement for housing a herd of animals including an automated system for milk feeding young animals.

### DETAILED DESCRIPTION OF EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

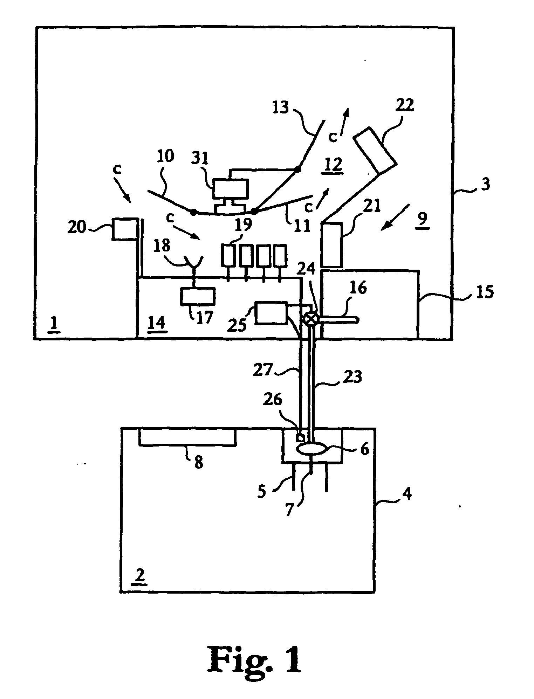

Fig 1. discloses an animal arrangement for housing a herd of animals including cows and calves. The arrangement comprises a first area 1 and a second area 2. The first area 1 is defined by first enclosure means 3 in the shape of a fence, a grid or the like, and the second area 2 is defined by a second enclosure means 4 in the shape of a further fence, a grid or the like. In the embodiment disclosed the second area 2 is completely arranged outside the first area 1; however, it is possible in accordance with the present invention to arrange the second area 2 within the first enclosure means 3 defining the first area 1. The first area 1 is arranged to house cows permitted to walk about freely in the first area 1. The second area 2 is arranged to house calves permitted to walk about freely in the second area 2.

In the second area 2, there is provided a liquid feed stall 5 accessible to the calves. The stall 5 comprises a liquid feed supply device 6 arranged to offer liquid feed such as fresh milk to the calves. The liquid feed supply device 6 comprises a nipple member, schematically indicated at 7, which enables sucking of said liquid feed by the calves. The second area 2 may also comprise a feeding device 8 arranged to offer solid feed, such as concentrate and hay.

In the first area 1, there is provided a milking station 9 provided for voluntary milking of the freely walking cows, i.e. the cows enter the milking station 9 in order to be milked when they need to. The milking station 9 comprises an enclosure having an inlet gate 10 and an outlet gate 11. Outside the outlet gate 11 there may be an exit space 12 to be passed by the cow leaving the milking station. The exit space 12 comprises a further outlet gate 13.

The milking station 9 comprises a milking machine 14 connected to a milk storage tank 15 by means of a milk line 16. Milking machine 14 includes an automatic handling device 17 having a robot arm 18 arranged to automatically apply teatcups 19 of the milking machine to the teats of a cow present in the milking station 9.

Furthermore, the milking station 9 may comprise an identification member 20 provided to identify a cow approaching the milking station 9. All of the gates 10, 11 and 13 are controllable by means of a schematically disclosed gate control device 31.

Thus a cow approaching the milking station may be given access to the milking station after having been identified by the identification member 20 by opening of the inlet gate 10.

During milking, milk is drawn from the teats of the cow by means of vacuum being applied to the teatcups 19. The milk drawn is measured by means of one or several milk meters (not illustrated), whereafter it is collected in milk storage tank 15. Preferably, there is provided a milk meter for each teat for measuring the individual milk flow from each teat.

After the milking has been completed the cow may leave the milking station 9 by opening of the outlet gates 11 and 13. The milking station 9 may also comprise a first feeding device 21 provided in the front end of the milking station 9 and a second feeding device 22 provided in the front end of the exit space 12.

A purpose of the first feeding device 21 is to entice the cow to enter the milking station 9 and to make her stand still during at least the attachment of the teatcups and a purpose of the second feeding device 22 is to entice the cow to leave the milking station 9 after the milking has been finished or is interrupted for any reason.

It is to be noted that the cow may be enticed to enter and leave the milking station 9 by other enticing means than the feeding devices 21, 22 disclosed. In this connection reference is made to the above-identified WO 96/19917. Furthermore, it is to be noted that the first area 1 also may include separate feeding and liquid supply boxes as well as more than one single milking station 9.

According to the present invention a milk line 23 is provided to permit transport of milk from milking machine 14 to liquid feed supply device 6 in the second area 2.

Milk lines 23 and 16 are connected to the milk machine by means of a three way valve 24 such that milk being collected in the milking machine is either transported to the milk storage tank 15 or to the liquid feed device 6. Valve 24 is controllable by means of a milk flow control device 25, which is supplied with a signal from identification member 20, said signal identifying each cow entering milking station 9.

The milking machine comprises further valve and line arrangements (not illustrated) in order to provide for discharge of waste milk and cleaning liquid. Particularly, as an alternative to three way valve 24, a four way valve may be used having also a waste discharge line connected thereto.

By such an arrangement it is possible to automatically transport milk from a selected one of a plurality of cows from the milking machine 14 to the feed device 6.

Particularly, milk from a cow being identified to produce milk of a predetermined quality is selected to be fed through line 23 to feed device 6, instead of the customary feed to storage tank 15. The milk of the predetermined quality may be chosen as milk, which is unsuitable for human consumption, e.g. if the cow is sick or injured, the milk may have high cell count values or there may be blood in the milk.

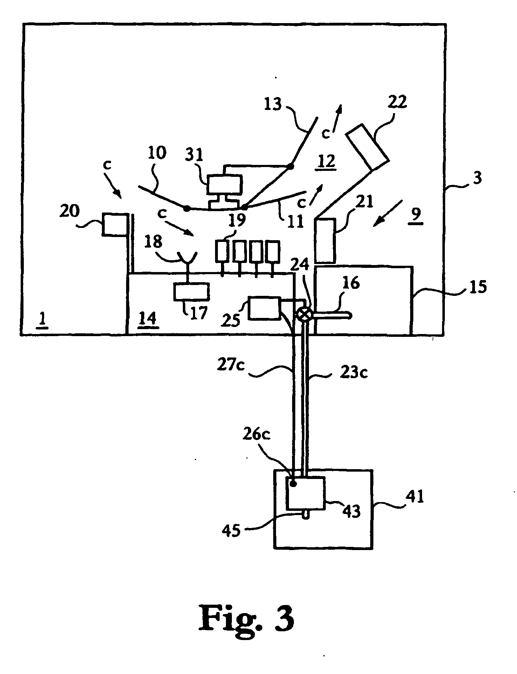

An other alternative is to choose milk from a cow being identified as one that has recently given birth to a calf. This aspect of the invention is further elaborated below with reference to Fig. 3. Yet an other alternative is to choose milk from a cow being identified at a given predetermined time, e.g. at a certain time in the morning or subsequent to regular cleaning of milk lines.

It shall be appreciated that the milk from each teat can be treated, i.e. measured, analyzed and transported, individually in the present milking station and hence the present invention include the possibility of automatically transporting milk from not only a selected one of a plurality of cows, but also from a selected one of the teats of said cow, from the milking machine 14 to the feed device 6. Thus, the invention provides for teat-individual selection of milk for calf feeding.

As the milking performed is a voluntary milking of the freely walking cows it may happen that the milk in feed device 6 is consumed before any selected cow enters milking station 9, and hence feed device 6 is completely emptied.

In order to remedy such a problem there is provided a level sensor 26 for measuring the level of the milk in liquid feed device 6 and thus the amount of milk left in feed device 6. This measured level is transferred through a control line 27 back to milk flow control device 25. Thus the selected cow, from which milk is automatically fed to feed device 6, may be chosen in dependence on said measured level of milk in feed device 6. Preferably, the selected cow is determined to be the next cow to be milked if the indicated level of milk is below a lower predetermined level, a so-called low-water mark.

Further, two subsequent readings yield the milk consumption at feed device 6 and by measuring the time between the readings the milk consumption rate may be estimated. These values may be used in the control of the milk supply according to the present invention, and further, the values may be stored in a database, and used for other purposes.

By providing the liquid feed stall 5 with a calf identification member (not illustrated) adapted to identify a calf entering the stall a calf may be given access to feed device 6 after having been identified by the calf identification member.

The combined provision of a level sensor and a calf identification member provide for individual monitoring and controlling of the feeding of each calf.

The amount of milk supplied to feed device 6 each time may be predetermined or may be in dependence on the level indicator 26 indicating that the level of milk is exceeding a higher predetermined level, a so-called high-water mark.

Further, the feed device may comprise cleaning means for cleaning milk-contacting surfaces of feed device 6 e.g. on a regular time basis.

Preferably, oxygen is added to the milk supplied to the calf feed device so as to preserve the milk.

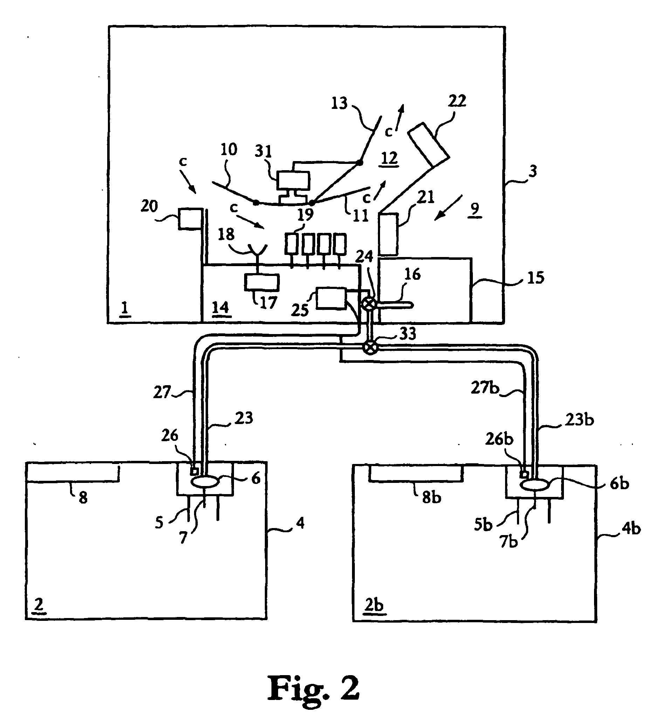

Next, with reference to Fig. 2, which schematically displays a further animal arrangement for housing a herd of animals including an automated system for milk feeding young animals, a second embodiment of the present invention will be described.

This embodiment includes the arrangement of Fig. 1 and further a third area 2b defined by third enclosure means 3b in the shape of a fence or similar. The third area 2b is arranged to house calves permitted to walk about freely in the third area 2b.

In the third area 2b, there is provided a feed stall 5b accessible to the calves in the third area. The stall 5b comprises a liquid feed supply device 6b arranged to offer liquid feed to calves. Further, the supply device 6b comprises a nipple member 7b, for enabling sucking of the liquid feed by calves. The third area 2b may comprise a feeding device 8b arranged to offer solid feed.

In this embodiment, a three way valve 33 is arranged in the milk line 23 downstream of three way valve 24. A further milk line 23b is connected between three way valve 33 and the feed supply device 6b in the third area so as to permit transport of milk from the milking machine 14 to feed supply device 6b. Valve 33 is controllable by means of the milk flow control device. Alternatively, instead of using the three way valves 24 and 33 a four way valve, or other suitable switching means, may be used.

Furthermore, also feed stall 5b is provided with a level sensor 26b for sensing the level of milk in feed supply device 6b, and a feedback line 27b is provided for transferring the sensed level of milk back to milk flow control device 25.

By such an arrangement it is possible to automatically transport milk from a selected one of a plurality of cows from the milking machine 14 to the feed device 6 and to automatically transport milk from a second selected one of a plurality of cows from the milking machine 14 to the feed device 6b.

The calves arranged to be housed in the third area 2b may be calves of a different age than those arranged to be housed in the second area 2. Alternatively, the calves in the third area are distinguishable from those in the second area in other manner, e.g. through their breed, health, size, or sex.

Finally, with reference to Fig. 3, which schematically displays yet a further animal arrangement for housing a herd of animals including an automated system for milk feeding young animals, a third embodiment of the invention will briefly be described.

This embodiment includes the first area 1 provided with the milking station 9 as shown in Fig. 1 and further a fourth area or stall 41. The fourth area 41 is arranged to house a single recently born calf and comprises a feed device suitable for feeding of recently born calves, here in the form of a bucket 43 or similar provided with a nipple 45, which enables sucking of milk from bucket 43.

The first days of the life of a calf is housed isolated from other animals and it is, during the first few days, fed with beestings from a cow more or less manually, e.g. by holding bucket 43 and monitoring the suckling by the calf. Such beestings are fat, contains high levels of antibodies and shall not be mixed with milk from other cows.

According to the invention a milk line 23c is connected to the milking machine 14 in the first area 1 through three way valve 24, and to the bucket 43 in the fourth area 41 so as to permit transport of milk (including beestings) from the milking machine 14 to bucket 43.

By such an arrangement it is possible to automatically transport milk from a selected one of a plurality of cows from the milking machine 14 to the bucket 43. Preferably, the selected cow is a cow, which recently has given birth to a calf (but not necessarily the calf housed in the fourth area 41), and thus produces beestings.

Furthermore, also bucket 43 may be provided with a level sensor 26c for sensing the level of milk in bucket 43, and a feedback line 27c is provided for transferring the sensed level of milk back to milk flow control device 25.

If the milk line 23c and the bucket 43 have been used for supply of beestings, they (as well as the milking machine) shall preferably be cleaned before a cow producing ordinary milk is allowed to enter the milking station.

By the arrangements according to the present invention possibilities of automatic breeding of calves by milk from individually selected cows via liquid feed supply devices, such as 6, 6b and 43, through an automatic milk supply arrangement have been demonstrated.

It shall be appreciated that the present invention is usable with other milking machines than the one described above. Particularly, it is usable with rotary or Herringbone parlours. Preferably, in such instances, milk is transported to the feed device two or three times a day, and only from cows with milk having high cell count values.

It shall further be appreciated that the arrangement of the present invention may comprise a third and a further feed device connected to the milking machine by means of further milk lines (not illustrated) and that a single feed device may be supplied with milk from a plurality of different milking machines.

It shall also be appreciated that the farmer nevertheless manually observes the calves and ensures that they are fed on regular time basis.

## Claims

1. A feed apparatus for automatic milk feeding of young animals comprising
- a first feed supply device (6, 43),
- a first milk line (23, 23c) connectable to said first feed supply device (6, 43) and further connectable to a milking machine (14) arranged for milking a plurality of animals housed in a first area (1),
wherein
- said milk line is adapted to automatically transport milk from at least a first one of said plurality of milk producing animals to said first feed supply device, **characterized in**
- a second feed supply device (6b), and
- a second milk line (23b) connectable to said second feed supply device, (6b) and further connectable to the milking machine (14), wherein
- said second milk line (23b) is adapted to automatically transport milk from at least a second one of said plurality of milk producing animal to said second feed supply device (6b); and
- said first feed supply device (6, 43) is accessible to young animals that are different from those to which said second feed supply device (6b) is accessible,
- a liquid feed stall (5) is provided in a second area (2) wherein the liquid feed stall (5) comprises said first feed supply device (6) and the second area (2) is defined by second enclosure means (4) and is arranged to house young animals permitted to walk freely in the second area (2), and
- a liquid feed stall (5b) is provided in a third area (2b) wherein the liquid feed stall (5b) comprises said second feed supply device (6b) and the third area (2b) is defined by third enclosure means (4b) and is arranged to house young animals permitted to walk about freely in the third area (2b);
- said animals being different **in that** those in the third area (2b) are distinguishable from those in the second area (2) though their age, breed, health, size, or sex.

2. The feed apparatus as claimed in claim 1, wherein said first milk line (23, 23c) is adapted to automatically transport milk from at least one teat of said first one of said plurality of milk producing animals to said first feed supply device.

3. The feed apparatus as claimed in Claim 1 or 2, wherein said first feed supply device (6, 43) is provided with a nipple member (7, 7b, 45) for enabling sucking of said milk automatically transported to the first feed supply device (6, 43) by said young animals.

4. The feed apparatus as claimed in any of Claims 1-3, wherein said first milk line (23, 23c) is connectable to said milking machine (14) by means of a valve (24, 33).

5. The feed apparatus as claimed in any of Claims 1-3, wherein said first one of said plurality of milk producing animals, from which milk is automatically transported to said first feed supply device, is an animal being identified to produce milk of a predetermined quality.

6. The feed apparatus as claimed in Claim 5, wherein said milk of said predetermined quality is milk, which is unsuitable in refined dairy products.

7. The feed apparatus as claimed in Claim 5, wherein said milk of said predetermined quality is milk, which is unsuitable for human consumption.

8. The feed apparatus as claimed in Claim 5, wherein said animal, which is identified to produce milk of said predetermined quality, is a sick or injured animal.

9. The feed apparatus as claimed in Claim 5, wherein said animal, which is identified to produce milk of said predetermined quality, is an animal known to produce milk having high cell count values.

10. The feed apparatus as claimed in any of Claims 1-4, wherein said first one of said plurality of milk producing animals, from which milk is automatically transported to said first feed supply device, is an animal being identified as one that has recently given birth to an animal and thus produces beestings.

11. The feed apparatus as claimed in any of Claims 1-14, wherein said first one of said plurality of milk producing animals, from which milk is automatically transported to said first feed supply device, is an animal being identified at a predetermined time.

12. The feed apparatus as claimed in any of Claims 1-11, wherein said first feed supply device (6) is provided with a level indicator (26, 26b, 26c) for indicating the level of milk in said first feed supply device (6) and wherein said first one of said plurality of milk producing animals, from which milk is automatically transported to said first feed supply device, is in dependence on said indicated level of milk.

13. The feed apparatus as claimed in Claim 12, wherein said first one of said plurality of milk producing animals, from which milk is automatically transported to said first feed supply device, is the first animal to be milked by said milking machine (14) subsequent to said indicated level of milk falling below a low-water mark.

14. The feed apparatus as claimed in any of Claims 1-11, wherein said first feed supply device (43) is adapted for feeding a recently bom calf.

15. The feed apparatus as claimed in any of Claims 1-11, wherein said first feed supply device (43) comprises a bucket (43) provided with a nipple member (45).

16. A method for automatic milk feeding of young animals comprising the steps of:
- automatically milking a plurality of milk producing animals by means of an automatic making machine (14), said animals being housed in a first area (1),
- automatically collecting milk from said plurality of milk producing animals in a milk storage tank (15) being connectable to said milking machine (14),
- automatically collecting milk from at least a first feed supply device (6, 43) by means of a first milk line (23, 23c) being connectable between said milking machine (14) and said first feed supply device, **characterized by** the steps of:
- automatically collecting milk from at least a second one of said plurality of milk producing animals in a second feed supply device (6b) by means of a second milk line (23b) being connectable between said milking machine (14) and said second feed supply, device (6b),
- giving young animals access to said first and second supply devices, wherein the young animals that are given access to said first feed supply device (6, 43) are different from those given access to said second feed supply device (6b), and wherein,
- a liquid feed stall (5) is provided in a second area (2) wherein the liquid feed stall (5) comprises said first feed supply device (6) and the second area (2) is defined by second enclosure means (4) and is arranged to house young animals permitted to walk freely in the second area (2), and
- a liquid feed stall (5b) is provided in a third area (2b) wherein the liquid feed stall (5b) comprises said second feed supply device (6b) and the third area (2b) is defined by third enclosure means (4b) and is arranged to house young animals permitted to walk about freely in the third area (2b);
- said animals being different in that those in the third area (2b) are distinguishable from those in the second area (2) though their age, breed, health, size, or sex.

17. The method as claimed in Claim 16, wherein said first one of said plurality of milk producing animals, from which milk is automatically collected in said first feed supply device (6, 43), is chosen as an animal being identified to produce milk of a predetermined quality.

18. The method as claimed in Claim 17, wherein said milk of said predetermined quality is milk, which is unsuitable in refined dairy products.

19. The method as claimed in Claim 17, wherein said milk of said predetermined quality is milk, which is unsuitable for human consumption.

20. The method as claimed in Claim 17, wherein said milk of said predetermined quality is milk having high cell count values.

21. The method as claimed in Claim 20, wherein said first one of said plurality of milk producing animals, from which milk is automatically collected in said first feed supply device, is chosen as an animal being identified as one that has recently given birth to an animal and thus produces beestings.

22. The method as claim in any of Claims 16-21, further comprising the steps of:
- indicating the level of milk in said first feed supply device (6) by means of a level indicator (26, 26b, 26c), and
- choosing said first one of said plurality of milk producing animals from which milk is automatically collected in said first feed supply device, in dependency on said indicated level of milk.

23. The method as claimed in Claim 22, wherein said first one of said plurality of milk producing animals, from which milk is automatically collected in said first feed supply device, is chosen as the first animal to be milked by said milking machine (14) when said level indicator indicating a level below a low-water mark.

## Patentansprüche

1. Fütterungsvorrichtung zur automatischen Milchfütterung von Jungtieren mit:
- einer ersten Futterstoff-Zuführvorrichtung (6, 43),
- einer ersten Milchleitung (23, 23c), die mit der ersten Futterstoff-Zuführvorrichtung (6, 43) verbindbar und weiter mit einer Melkmaschine (14) verbindbar ist, die zum Melken einer Vielzahl von Tieren ausgebildet ist, die in einem ersten Bereich (1) untergebracht sind, wobei
- die Milchleitung ausgebildet ist, automatisch Milch von zumindest eines ersten der Vielzahl der Milch produzierenden Tiere zu der ersten Futterstoff-Zuführvorrichtung zu transportieren, **gekennzeichnet durch**
- eine zweite Futterstoff-Zuführvorrichtung (6b) und
- eine zweite Milchleitung (23b), die mit der zweiten Futterstoff-Zuführvorrichtung (6b) verbindbar und ferner mit der Melkmaschine (14) verbindbar ist, wobei
- die zweite Milchleitung (23b) ausgebildet ist, automatisch Milch zumindest eines zweiten der Vielzahl der Milch produzierenden Tiere zu der zweiten Futterstoff-Zuführvorrichtung (6b) zu transportieren; und
- die erste Futterstoff-Zuführvorrichtung (6, 43) für Jungtiere zugänglich ist, die von denen verschieden sind, für die die zweite Futterstoff-Zuführvorrichtung (6b) zugänglich ist,
- wobei ein Flüssigfutterstoffstall (5) in einem zweiten Bereich (2) vorgesehen ist, wobei der Flüssigfutterstoffstall (5) die erste Futterstoff-Zuführvorrichtung (6) umfasst und der zweite Bereich (2) **durch** eine zweite Einfriedungseinrichtung (4) definiert ist und ausgebildet ist, Jungtiere unterzubringen, denen es erlaubt ist, in dem zweiten Bereich (2) frei herumzulaufen, und
- ein Flüssigfutterstoffstall (5b) in einem dritten Bereich (2b) vorgesehen ist, wobei der Flüssigfutterstoffstall (5b) die zweite Futterstoff-Zuführvorrichtung (6b) umfasst und der dritte Bereich (2b) **durch** eine dritte Einfriedungseinrichtung (4b) definiert ist und ausgebildet ist, Jungtiere unterzubringen, denen es erlaubt ist, in dem dritten Bereich (2b) frei herumzulaufen,
- wobei die Tiere **dadurch** unterschiedlich sind, dass die im dritten Bereich (2b) **durch** ihr Alter, Rasse, Gesundheit, Größe oder Geschlecht von denen im zweiten Bereich (2) unterscheidbar sind.

2. Fütterungsvorrichtung nach Anspruch 1, bei der die erste Milchleitung (23, 23c) ausgebildet ist, automatisch Milch von zumindest einer ersten Zitze des ersten der Vielzahl der Milch produzierenden Tiere zu der ersten Futterstoff-Zuführvorrichtung zu transportieren.

3. Fütterungsvorrichtung nach Anspruch 1 oder 2, bei der die erste Futterstoff-Zuführvorrichtung (6, 43) mit einem Nippelelement (7, 7b, 45) zum Ermöglichen eines Saugens der Milch durch Jungtiere versehen ist, die automatisch zu der ersten Futterstoff-Zuführvorrichtung (6, 43) zugeführt wird.

4. Fütterungsvorrichtung nach einem der Ansprüche 1 - 3, bei der die erste Milchleitung (23, 23c) mit der Melkmaschine (14) durch ein Ventil (24, 33) verbindbar ist.

5. Fütterungsvorrichtung nach einem der Ansprüche 1 - 3, bei der das erste der Vielzahl der Milch produzierenden Tiere, von denen Milch automatisch zu der ersten Futterstoff-Zuführvorrichtung transportiert wird, ein Tier ist, das identifiziert wurde, Milch einer vorbestimmten Qualität zu erzeugen.

6. Fütterungsvorrichtung nach Anspruch 5, bei der die Milch einer vorbestimmten Qualität eine Milch ist, die für raffinierte Milchwirtschaftsprodukte ungeeignet ist.

7. Fütterungsvorrichtung nach Anspruch 5, bei der die Milch der vorbestimmten Qualität eine Milch ist, die für menschliche Ernährung ungeeignet ist.

8. Fütterungsvorrichtung nach Anspruch 5, bei der das Tier, das identifiziert wurde, Milch der vorbestimmten Qualität zu erzeugen, ein krankes oder verletztes Tier ist.

9. Fütterungsvorrichtung nach Anspruch 5, bei der das Tier, welches identifiziert wurde, Milch der vorbestimmten Qualität zu produzieren, ein Tier ist, von dem bekannt ist, Milch mit hohen Zellenzählwerten zu erzeugen.

10. Fütterungsvorrichtung nach einem der Ansprüche 1 - 4, bei der das erste der Vielzahl der Milch produzierenden Tiere, von denen Milch automatisch zu der ersten Futterstoff-Zuführvorrichtung transportiert wird, ein Tier ist, das als eines identifiziert wurde, das erst kürzlich ein Tier geboren hat und deshalb Biestmilch erzeugt.

11. Fütterungsvorrichtung nach einem der Ansprüche 1 - 4, bei der das erste der Vielzahl der Milch produzierenden Tiere, von denen Milch automatisch zu der ersten Futterstoff-Zuführvorrichtung transportiert wird, ein Tier ist, das zu einer vorbestimmten Zeit identifiziert wurde.

12. Fütterungsvorrichtung nach einem der Ansprüche 1 - 11, bei der die erste Futterstoff-Zuführvorrichtung (6) mit einem Niveauindikator (26, 26b, 26c) zum Anzeigen des Milchniveaus in der ersten Futterstoff-Zuführvorrichtung (6) versehen ist und bei der das erste der Vielzahl der Milch produzierenden Tiere, von denen Milch automatisch zu der ersten Futterstoff-Zuführvorrichtung transportiert wird, in Abhängigkeit des angezeigten Milchniveaus ist.

13. Fütterungsvorrichtung nach Anspruch 12, bei der das erste der Vielzahl der Milch produzierenden Tiere, von denen Milch automatisch zu der ersten Futterstoff-Zuführvorrichtung transportiert wird, das erste durch die Melkmaschine (14) gemolkene Tier im Anschluss an das Abfallen des angezeigten Milchniveaus unter eine Niedrigwassermarke ist.

14. Fütterungsvorrichtung nach einem der Ansprüche 1 - 11, bei der die erste Futterstoff-Zuführvorrichtung (43) zum Füttern eines kürzlich geborenen Kalbes ausgebildet ist.

15. Fütterungsvorrichtung nach einem der Ansprüche 1 - 11, bei der die erste Futterstoff-Zuführvorrichtung (43) einen Eimer (43) aufweist, der mit einem Nippelelement (45) versehen ist.

16. Verfahren zur automatischen Milchfütterung von Jungtieren mit folgenden Schritten:
- automatisches Melken einer Vielzahl Milch produzierender Tiere durch eine automatische Melkmaschine (14), wobei die Tiere in einem ersten Bereich (1) untergebracht sind,
- automatisches Sammeln der Milch der Vielzahl der Milch produzierenden Tiere in einem Milchlagertank (15), der mit der Melkmaschine (14) verbindbar ist,
- automatisches Sammeln der Milch von zumindest einer ersten Futterstoff-Zuführvorrichtung (6, 43) durch eine erste Milchleitung (23, 23c), die zwischen der Melkmaschine (14) und der ersten Futterstoff-Zuführvorrichtung verbindbar ist, **gekennzeichnet durch folgende Schritte:**
- automatisches Sammeln der Milch von zumindest einem zweiten der Vielzahl der Milch produzierenden Tiere in einer zweiten Futterstoff-Zuführvorrichtung (6b) **durch** eine zweite Milchleitung (23b), die zwischen der Melkmaschine (14) und der zweiten Futterstoff-Zuführvorrichtung (6b) verbindbar ist, und
- Zuganggewähren von Jungtieren zu der ersten und zweiten Zuführvorrichtung, wobei die Jungtiere, denen Zugang zu der ersten Futterstoff-Zuführvorrichtung (6, 43) gewährt wird, zu denen unterschiedlich sind, denen Zugang zu der zweiten Futterstoff-Zuführvorrichtung (6b) gewährt wird, und wobei
- ein Flüssigfutterstoffstall (5) in einem zweiten Bereich (2) vorgesehen ist, wobei der Flüssigfutterstoffstall (5) die erste Futterstoff-Zuführvorrichtung (6) umfasst und der zweite Bereich (2) **durch** eine zweite Einfriedungseinrichtung (4) definiert ist und ausgebildet ist, Jungtiere unterzubringen, denen es erlaubt ist, in dem zweiten Bereich (2) frei herumzulaufen, und
- ein Flüssigfutterstofifstall (5b) in einem dritten Bereich (2b) vorgesehen ist, wobei der Flüssigfutterstoffstall (5b) die zweite Futterstoff-Zuführvorrichtung (6b) umfasst und der dritte Bereich (2b) **durch** eine dritte Einfriedungseinrichtung (4b) definiert ist und ausgebildet ist, Jungtiere unterzubringen, denen es erlaubt ist, in dem dritten Bereich (2b) frei herumzulaufen,
- wobei die Tiere **dadurch** unterschiedlich sind, dass die im dritten Bereich (2b) **durch** ihr Alter, Rasse, Gesundheit, Größe oder Geschlecht von denen im zweiten Bereich (2) unterscheidbar sind.

17. Verfahren nach Anspruch 16, bei dem das erste der Vielzahl der Milch produzierenden Tiere, von der Milch automatisch in der ersten Futterstoff-Zuführvorrichtung (6, 43) gesammelt wird, als ein Tier ausgewählt wird, das identifiziert wurde, Milch einer vorbestimmten Qualität zu erzeugen.

18. Verfahren nach Anspruch 17, bei dem die Milch der vorbestimmten Qualität Milch ist, die für raffinierte Milchwirtschaftsprodukte ungeeignet ist.

19. Verfahren nach Anspruch 17, bei dem Milch der vorbestimmten Qualität Milch ist, die für menschliche Ernährung ungeeignet ist.

20. Verfahren nach Anspruch 17, bei dem Milch der vorbestimmten Qualität Milch mit hohen Zellenzählwerten ist.

21. Verfahren nach Anspruch 20, bei dem das erste der Vielzahl der Milch produzierenden Tiere, von dem Milch automatisch in der ersten Futterstoff-Zuführvorrichtung gesammelt wird, als ein Tier ausgewählt wird, das als eines identifiziert wurde, das erst kürzlich ein Tier geboren hat und deshalb Biestmilch erzeugt.

22. Verfahren nach einem der Ansprüche 16 - 21, das ferner folgende Schritte aufweist:
- Anzeigen des Milchniveaus in der ersten Futterstoff-Zuführvorrichtung (6) durch einen Niveauindikator (26, 26b, 26c) und
- Auswählen eines ersten der Vielzahl der Milch produzierenden Tiere, von dem Milch automatisch in der ersten Futterstoff-Zuführvorrichtung gesammelt wird, in Abhängigkeit des angezeigten Milchniveaus.

23. Verfahren nach Anspruch 22, bei dem das erste aus der Vielzahl der Milch produzierenden Tiere, von dem Milch automatisch in der ersten Futterstoff-Zuführvorrichtung gesammelt wird, als das erste Tier ausgewählt wird, das durch die Melkmaschine (14) gemolken wird, wenn der Niveauindikator ein Niveau unterhalb einer Niedrigwassermarke anzeigt.

## Revendications

1. Appareil d'alimentation destiné à faire téter automatiquement de jeunes animaux comprenant :
un premier dispositif d'alimentation (6, 43),
une première conduite de lait (23, 23c) pouvant être raccordée audit premier dispositif d'alimentation (6, 43) et pouvant en outre être raccordée à une machine à traire (14) agencée de façon à traire une pluralité d'animaux logés dans une première zone (1),
dans lequel :
ladite conduite de lait est adaptée pour transporter automatiquement du lait d'au moins un premier de ladite pluralité d'animaux producteurs de lait jusqu'audit premier dispositif d'alimentation, **caractérisé par** :
un deuxième dispositif d'alimentation (6b), et
une deuxième conduite de lait (23b) pouvant être raccordée audit deuxième dispositif d'alimentation (6b) et pouvant en outre être raccordée à la machine à traire (14), dans lequel :
ladite deuxième conduite de lait (23b) est adaptée pour transporter automatiquement du lait d'au moins un deuxième parmi ladite pluralité d'animaux producteurs de lait jusqu'audit deuxième dispositif d'alimentation (6b) ; et
ledit premier dispositif d'alimentation (6, 43) est accessible pour les jeunes animaux qui sont différents de ceux pour lesquels ledit deuxième dispositif d'alimentation (6b) est accessible,
une stalle d'alimentation liquide (5) est prévue dans une deuxième zone (2), dans laquelle la stalle d'alimentation liquide (5) comprend ledit premier dispositif d'alimentation (6), et la deuxième zone (2) est définie par des deuxièmes moyens d'enclos (4) et est agencée pour loger de jeunes animaux autorisés à marcher librement dans la deuxième zone (2), et
une stalle d'alimentation liquide (5b) est prévue dans une troisième zone (2b), dans laquelle la stalle d'alimentation liquide (5b) comprend ledit deuxième dispositif d'alimentation (6b) et la troisième zone (2b) est définie par des troisièmes moyens d'enclos (4b) et est agencée pour loger de jeunes animaux autorisés à marcher librement dans la troisième zone (2b) ;
lesdits animaux étant différents en ce que ceux qui sont dans la troisième zone (2b) peuvent être distingués de ceux qui sont dans la deuxième zone (2) par leur âge, de leur race, de leur état de santé, de leur taille ou de leur sexe.

2. Appareil d'alimentation selon la revendication 1, dans lequel ladite première conduite de lait (23, 23c) est adaptée pour transporter automatiquement du lait à partir d'au moins un trayon dudit premier de ladite pluralité d'animaux producteurs de lait jusqu'audit premier dispositif d'alimentation.

3. Appareil d'alimentation selon la revendication 1 ou 2, dans lequel ledit premier dispositif d'alimentation (6, 43) est doté d'un élément formant tétine (7, 7b, 45) permettant auxdits jeunes animaux de téter ledit lait automatiquement transporté jusqu'au premier dispositif d'alimentation (6, 43).

4. Appareil d'alimentation selon l'une quelconque des revendications 1 à 3, dans lequel ladite première conduite de lait (23, 23c) peut être raccordée à ladite machine à traire (14) au moyen d'une valve (24, 33).

5. Appareil d'alimentation selon l'une quelconque des revendications 1 à 3, dans lequel ledit premier de ladite pluralité d'animaux producteurs de lait, à partir duquel le lait est automatiquement transporté jusqu'audit premier dispositif d'alimentation, est un animal qui est identifié pour produire du lait d'une qualité prédéterminée.

6. Appareil d'alimentation selon la revendication 5, dans lequel ledit lait de ladite qualité prédéterminée est du lait inapproprié pour les produits laitiers raffinés.

7. Appareil d'alimentation selon la revendication 5, dans lequel ledit lait de ladite qualité prédéterminée est du lait inapproprié pour la consommation humaine.

8. Appareil d'alimentation selon la revendication 5, dans lequel ledit animal, qui est identifié pour produire du lait de ladite qualité prédéterminée, est un animal malade ou blessé.

9. Appareil d'alimentation selon la revendication 5, dans lequel ledit animal identifié pour produire du lait de ladite qualité prédéterminée est un animal connu pour produire du lait ayant des valeurs de numération cellulaire élevées.

10. Appareil d'alimentation selon l'une quelconque des revendications 1 à 4, dans lequel ledit premier de ladite pluralité d'animaux producteurs de lait, à partir duquel le lait est automatiquement transporté vers ledit premier dispositif d'alimentation, est un animal qui est identifié comme étant celui qui a récemment donné naissance à un animal et qui produit donc du colostrum.

11. Appareil d'alimentation selon l'une quelconque des revendications 1 à 14, dans lequel ledit premier de ladite pluralité d'animaux producteurs de lait, à partir duquel le lait est automatiquement transporté vers ledit premier dispositif d'alimentation, est un animal qui est identifié à un moment prédéterminé.

12. Appareil d'alimentation selon l'une quelconque des revendications 1 à 11, dans lequel ledit premier dispositif d'alimentation (6) est prévu avec un indicateur de niveau (26, 26b, 26c) pour indiquer le niveau de lait dans ledit premier dispositif d'alimentation (6), et dans lequel ledit premier de ladite pluralité d'animaux producteurs de lait, à partir duquel le lait est automatiquement transporté jusqu'audit premier dispositif d'alimentation, dépend dudit niveau de lait indiqué.

13. Appareil d'alimentation selon la revendication 12, dans lequel ledit premier de ladite pluralité d'animaux producteurs de lait, à partir duquel le lait est automatiquement transporté jusqu'audit premier dispositif d'alimentation, est le premier animal à traire par ladite machine à traire (14) après que ledit niveau de lait indiqué ait chuté au-dessous d'une marque d'eau basse.

14. Appareil d'alimentation selon l'une quelconque des revendications 1 à 11, dans lequel ledit premier dispositif d'alimentation (43) est adapté pour nourrir un veau venant de naître.

15. Appareil d'alimentation selon l'une quelconque des revendications 1 à 11, dans lequel ledit premier dispositif d'alimentation (43) comprend un godet (43) doté d'un élément formant tétine (45).

16. Procédé destiné à faire téter automatiquement de jeunes animaux, comprenant les étapes consistant à :
traire automatiquement une pluralité d'animaux producteurs de lait au moyen d'une machine à traire automatique (14), lesdits animaux étant logés dans une première zone (1),
collecter automatiquement le lait de ladite pluralité d'animaux producteurs de lait dans un réservoir de stockage du lait (15) qui peut être raccordé à ladite machine à traire (14),
collecter automatiquement le lait à partir d'au moins un premier dispositif d'alimentation (6, 43) au moyen d'une première conduite de lait (23, 23c) qui peut être raccordée entre ladite machine à traire (14) et ledit premier dispositif d'alimentation, **caractérisé par** les étapes consistant à :
collecter automatiquement le lait à partir d'au moins un deuxième de ladite pluralité d'animaux producteurs de lait dans un deuxième dispositif d'alimentation (6b) au moyen d'une deuxième conduite de lait (23b) qui peut être raccordée entre ladite machine à traire (14) et ledit deuxième dispositif d'alimentation (6b),
permettre aux jeunes animaux d'avoir accès auxdits premier et deuxième dispositifs d'alimentation, dans lequel les jeunes animaux qui ont accès audit premier dispositif d'alimentation (6, 43) sont différents de ceux qui ont accès audit deuxième dispositif d'alimentation (6b), et dans lequel :
une stalle d'alimentation liquide (5) est prévue dans une deuxième zone (2), dans laquelle la stalle d'alimentation liquide (5) comprend un premier dispositif d'alimentation (6) et une deuxième zone (2) est définie par des deuxièmes moyens d'enclos (4) et est agencée pour loger de jeunes animaux autorisés à marcher librement dans la deuxième zone (2), et
une stalle d'alimentation liquide (5b) est prévue dans une troisième zone (2b), dans laquelle la stalle d'alimentation liquide (5b) comprend ledit deuxième dispositif d'alimentation (6b) et la troisième zone (2b) est définie par des troisièmes moyens d'enclos (4b) et est agencée pour loger de jeunes animaux autorisés à marcher librement dans la troisième zone (2b) ;
les animaux étant différents en ce que ceux qui sont dans la troisième zone (2b) peuvent être distingués de ceux qui sont dans la deuxième zone (2) par leur âge, leur race, leur état de santé, leur taille ou leur sexe.

17. Procédé selon la revendication 16, dans lequel ledit premier de ladite pluralité d'animaux producteurs de lait, à partir duquel le lait est automatiquement collecté dans ledit premier dispositif d'alimentation (6, 43), est choisi comme étant un animal identifié pour produire du lait d'une qualité prédéterminée.

18. Procédé selon la revendication 17, dans lequel ledit lait de ladite qualité prédéterminée est du lait qui est inapproprié pour les produits laitiers raffinés.

19. Procédé selon la revendication 17, dans lequel ledit lait de ladite qualité prédéterminée est du lait qui est inapproprié pour la consommation humaine.

20. Procédé selon la revendication 17, dans lequel ledit lait de ladite qualité prédéterminée est du lait ayant des valeurs de numération cellulaire élevées.

21. Procédé selon la revendication 20, dans lequel ledit premier de ladite pluralité d'animaux producteurs de lait, à partir duquel le lait est automatiquement collecté dans ledit premier dispositif d'alimentation, est choisi comme étant un animal identifié comme celui qui a récemment donné naissance à un animal et qui produit donc du colostrum.

22. Procédé selon l'une quelconque des revendications 16 à 21, comprenant en outre les étapes consistant à :
indiquer le niveau de lait dans ledit premier dispositif d'alimentation (6) au moyen d'un indicateur de niveau (26, 26b, 26c), et
choisir ledit premier de ladite pluralité d'animaux producteurs de lait à partir duquel le lait est automatiquement collecté dans ledit premier dispositif d'alimentation, en fonction dudit niveau de lait indiqué.

23. Procédé selon la revendication 22, dans lequel ledit premier de ladite pluralité d'animaux producteurs de lait, à partir duquel le lait est automatiquement collecté dans ledit premier dispositif d'alimentation, est choisi comme étant le premier animal à traire par ladite machine à traire (14) lorsque ledit indicateur de niveau indique un niveau inférieur à une marque d'eau basse.
